# EUROPÄISCHE PATENTANMELDUNG

(11) **EP 4 616 982 A1**
(43) Veröffentlichungstag der Anmeldung: **17.09.2025**
(21) Anmeldenummer: 24162960.9
(22) Anmeldetag: 12.03.2024
(51) Int. Cl.: B23B 31/30

(54) **HYDRODEHNSPANNFUTTER**

(71) Anmelder: Gühring KG, 72458 Albstadt (DE)
(72) Erfinder: Steidle, Christian, 72459 Albstadt (DE); Kleiner, Gilbert, 72514 Inzigkofen (DE)
(74) Vertreter: Winter, Brandl - Partnerschaft mbB

(57) **Zusammenfassung**

Es ist ein Hydrodehnspannfutter (1) mit einer sich entlang einer Längsmittelachse (5) erstreckenden zentralen Spannöffnung zum Aufnehmen und Spannen eines Werkzeugschafts und einer die Spannöffnung umgebenden, mit Druckfluid beaufschlagbaren Druckkammer, die durch eine radial-elastisch verformbare Trennwand (34) von der Spannöffnung abgegrenzt ist, bereitgestellt. In der Trennwand (34) sind eine Vielzahl von um die Spannöffnung herum verteilten, sich entlang der Längsmittelachse (5) erstreckenden Dehnfugen (38) ausgebildet, die zur Spannöffnung hin offen und zur Druckkammer hin geschlossen sind.

## Beschreibung

Die Erfindung betrifft ein Hydrodehnspannfutter.

Hydrodehnspannfutter sind in vielfacher Gestalt im Einsatz, um ein Schneidwerkzeug mit einer hohen Rundlaufgenauigkeit in einer Spannöffnung zu spannen.

So ist beispielsweise aus der DE 10 2012 111 456 C5 ein Hydrodehnspannfutter bekannt, bei dem eine mit einem Druckfluid beaufschlagbare Druckkammer zwischen der Innenumfangsfläche einer zentralen Aufnahmeöffnung in einem Grundkörper und einer in der Aufnahmeöffnung eingelöteten Dehnspannbuchse eingeschlossen ist. Die Dehnspannbuchse bildet eine in radialer Richtung relativ dünne elastisch verformbare Trennwand, die die Druckkammer von einer sich entlang einer Längsmittelachse des Hydrodehnspannfutters erstreckenden Spannöffnung, die einen Spannschaft eines Schneidwerkzeugs aufnimmt, abgrenzt. Aufgrund des Grundkörpers und der im Grundkörper eingelöteten Dehnspannbuchse ist das Hydrodehnspannfutter zwar aus zwei Komponenten und damit mehrteilig aufgebaut. Diese Komponenten sind aber durch Verlötung dauerhaft und fest miteinander verbunden.

Die WO 2017/093280 A1 schlägt dagegen ein Hydrodehnspannfutter vor, bei dem eine durch eine radial-elastisch verformbare Trennwand von einer Spannöffnung abgegrenzte Druckkammer in einem 3D-gedruckten, d.h. generativ/additiv hergestellten, Spannfutterkörper ausgebildet ist. Der Spannfutterkörper ist daher einstückig aufgebaut.

In beiden Varianten wird durch eine Beaufschlagung der die Spannöffnung umgebenden Druckkammer mit Hydraulikdruck der in der Spannöffnung aufgenommene Spannschaft eines Schneidwerkzeugs durch eine elastische Verformung der Trennwand gegen den Spannschaft reibschlüssig gespannt. Das vom Hydrodehnspannfutter auf das eingespannte Schneidwerkzeug übertragbare Drehmoment wird daher durch den Reibschluss zwischen der Trennwand und dem Spannschaft bestimmt. Der Reibschluss wird durch den Hydraulikdruck in der Druckkammer erzielt.

Die im Hydrodehnspannfutter vorgesehene Spannöffnung ist für einen vorgegebenen Spannschaftdurchmesser ausgelegt. Zum Spannen von Werkzeugen mit einem kleineren Spannschaftdurchmesser als der vorgegebene Spannschaftdurchmesser werden in die Spannöffnung zusätzlich Reduzierbuchsen eingeschoben, wie sie beispielsweise aus der DE 20 2011 004 231 U1 oder DE 20 2015 105 500 U1 bekannt sind. Derartige Reduzierbuchse haben über den Umfang verteilte Längsschlitze, die der Reduzierbuchse die erforderliche Elastizität zur Übertragung der Spannkraft von der Trennwand auf den Spannschaft verleihen. Anders als die oben erwähnten Dehnspannbuchsen sind die Reduzierbuchsen jedoch nicht dauerhaft und fest mit dem Hydrodehnspannfutter verbunden.

Es hat sich jedoch gezeigt, dass es oftmals schwierig ist, einen ausreichend hohen Reibschluss zwischen einem Hydrodehnspannfutter (mit oder ohne Reduzierbuchse) und einem zu spannenden Werkzeugschaft aufzubauen. Insbesondere bei einem kleinen Werkzeugschaftdurchmesser muss der Hydraulikdruck in der Druckkammer je nach Anwendungsfall, beispielsweise für eine Schruppbearbeitung, erheblich angehoben werden, um den erforderlichen Reibschluss zu erzielen. Dies kann sich einerseits negativ auf die Lebensdauer der Trennwand oder der an die Trennwand angrenzenden Abschnitte des Hydrodehnspannfutters auswirken. Andererseits führen derartige Druckbeaufschlagungen dazu, dass mit der Zeit aufgrund der nicht mehr kontrollierbaren Verformung der Trennwand die angestrebten Rundlaufgenauigkeiten nicht mehr erzielt werden können. Der Hydraulikdruck in der Druckkammer kann also nicht unbegrenzt angehoben werden, wodurch das auf den Werkzeugschaft des Schneidwerkzeugs übertragene Drehmoment begrenzt ist.

Es besteht allgemein ein Verbesserungspotenzial dahingehend, den in der Druckkammer aufgebauten Hydraulikdruck möglichst effizient in eine auf den Werkzeugschaft des Schneidwerkzeugs wirkende radiale Spannkraft zur Erzielung eines Reibschlusses bzw. ein im Betrieb des Hydrodehnspannfutters übertragenes Drehmoment umzuwandeln. Des Weiteren soll auch bei relativ niedrigen Hydraulikdrücken in der Druckkammer ein sicherer Reibschluss erzielt werden, wodurch die Lebensdauer der Trennwand oder der an die Trennwand angrenzenden Abschnitte des Hydrodehnspannfutters hochgehalten werden kann.

Der Erfindung liegt somit die Aufgabe zugrunde, ein Hydrodehnspannfutter mit einer sich entlang einer Längsmittelachse erstreckenden zentralen Spannöffnung zum Aufnehmen und Spannen eines Werkzeugschafts und einer die Spannöffnung umgebenden, mit Druckfluid beaufschlagbaren Druckkammer, die durch eine radial-elastisch verformbare Trennwand von der Spannöffnung abgegrenzt ist, zu schaffen, mit dem der Werkzeugschaft zuverlässig gespannt werden kann.

Diese Aufgabe kann durch ein Hydrodehnspannfutter mit den Merkmalen des Anspruchs 1 gelöst werden. Die Unteransprüche betreffen vorteilhafte Ausgestaltungen.

Das Hydrodehnspannfutter hat eine sich entlang einer Längsmittelachse erstreckende zentrale Spannöffnung zum Aufnehmen und Spannen eines Werkzeugschafts und eine die Spannöffnung umgebende, mit Druckfluid beaufschlagbare Druckkammer, die durch eine radial-elastisch verformbare Trennwand von der Spannöffnung abgegrenzt sein kann. Um die Aufgabe zu lösen, können in der Trennwand eine Vielzahl von um die Spannöffnung herum verteilten, sich entlang der Längsmittelachse erstreckenden Dehnfugen ausgebildet sein, die zur Spannöffnung hin offen und zur Druckkammer hin geschlossen sind.

Durch die in der Trennwand um die Spannöffnung herum verteilten, sich entlang der Längsmittelachse erstreckenden Dehnfugen wird die Elastizität der Trennwand erhöht. Die Trennwand kann sich bei einer Beaufschlagung der Druckkammer mit Hydraulikdruck radial nach innen, d.h. in Richtung der Spannöffnung bzw. eines in der Spannöffnung aufgenommenen Werkzeugschafts eines Schneidwerkzeugs, ausdehnen, weshalb der in der Druckkammer aufgebaute Hydraulikdruck effizient in eine auf den Werkzeugschaft wirkende radiale Spannkraft zur Erzielung eines Reibschlusses bzw. ein im Betrieb des Hydrodehnspannfutters übertragenes Drehmoment umgewandelt werden kann. Die in der Trennwand ausgebildeten Dehnfugen können des Weiteren die in der Trennwand auftretenden Spannungen reduzieren, wodurch sich die Lebensdauer des Hydrodehnspannfutters erhöht. Die Dehnfugen können dabei unterschiedlichste Querschnittsformen, d.h. Breiten und Tiefen, haben. Die Querschnittsform soll sicherstellen, dass die Trennwand die nötige radiale Elastizität zur sicheren Spannung des Werkzeugschafts aufweist. Insgesamt ist das Hydrodehnspannfutter in der Lage, einen Werkzeugschaft eines Schneidwerkzeugs zuverlässig zu spannen. Die positiven Effekte der in der Trennwand ausgebildeten Dehnfugen werden unabhängig davon erzielt, ob in der Spannöffnung zusätzlich eine dem Fachmann an sich bekannte Reduzierhülse eingesetzt ist oder nicht.

Für einen vorgegebenen Spannöffnungs- bzw. Werkzeugschaftdurchmesser ermöglichen die in der Trennwand vorgesehenen Dehnfugen eine Gestaltung in der Weise, dass sich die an die Trennwand angrenzende Druckkammer radial nach innen bis auf einen Innenerstreckungsdurchmesser erstreckt, der größer ist, als wenn in der in der Trennwand keine Dehnfugen ausgebildet sind. Verglichen mit einer die erwähnten Dehnfugen aufweisenden Trennwand müsste die in radialer Richtung gemessene Wandstärke einer Trennwand ohne Dehnfugen zudem deutlich kleiner sein, die Trennwand also deutlich dünnwandiger gestaltet sein, um einen in der an die Trennwand angrenzenden Druckkammer aufgebauten Hydraulikdruck effizient in eine auf den Werkzeugschaft des Schneidwerkzeugs wirkende radiale Spannkraft umwandeln zu können. Des Weiteren zeichnet sich eine die Dehnfugen aufweisende Trennwand aufgrund des größeren Innenerstreckungsdurchmessers durch eine größere Außenumfangslänge und daher eine größere mit Hydraulikdruck beaufschlagbare Außenumfangsfläche aus als eine axial gleich lange Trennwand ohne Dehnfugen. Daher kann bei gleich hohem Hydraulikdruck in der an die Trennwand angrenzenden Druckkammer eine die Dehnfugen aufweisende Trennwand höhere Spannkräfte radial nach innen ausüben als eine Trennwand ohne Dehnfugen.

In der Trennwand können 14 bis 18, insbesondere 16, Dehnfugen, ausgebildet sein.

Versuche haben gezeigt, dass 14 bis 18, insbesondere 16, in der Trennwand ausgebildete Dehnfugen einerseits eine hohe Stabilität und andererseits eine gute Elastizität der Trennwand gewährleisten können.

In einer weiteren Ausführungsform sind die Dehnfugen um die Längsmittelachse herum äquidistant verteilt.

Durch die um die Längsmittelachse herum äquidistante Verteilung der Dehnfugen wirkt die auf den Werkzeugschaft ausgeübte Spannkraft, die durch den Hydraulikdruck in der Druckkammer erzeugt wird, gleichmäßig um den gesamten Umfang des Werkzeugschafts herum. Mit anderen Worten kann die radiale Verformung der Trennwand gleichförmig und verlustfreier in eine zentrierte Einschnürung der Spannöffnung umgewandelt werden, so dass der Werkzeugschaft sicher gespannt und Drehmomente zuverlässig übertragen werden können.

Die Dehnfugen können als im Querschnitt schmale Axialschlitze ausgebildet sein.

Wenn die Dehnfugen als Axialschlitze ausgebildet sind, deren in Radialrichtung der Spannöffnung gemessene Tiefe, insbesondere deutlich, größer ist als deren in Umfangsrichtung der Spannöffnung gemessene Breite, wird einerseits die erforderliche radiale Elastizität der Trennwand erzielt und bleibt andererseits die nötige Stabilität der Trennwand erhalten.

In einer weiteren Ausführungsform haben die Dehnfugen, in Erstreckungsrichtung gesehen, einen U-, V- oder rechtecktförmigen Querschnitt.

Eine U-, V- oder Rechteckform lässt sich auf einfache Weise in der Trennwand ausbilden. Vorzugsweise die Dehnfugen nicht scharfkantig geformt, um Spannungsspitzen in der Trennwand zu vermeiden und die Lebensdauer zu erhöhen.

In einer weiteren Ausführungsform münden die Spannöffnung und die Dehnfugen in axialer Richtung in einen an die Spannöffnungen anschließenden Hohlraum.

Durch den Hohlraum wird erreicht, dass sich die Spannöffnung und die Dehnfugen axial über dieselbe Länge erstrecken und eine Spannkraft über die volle Länge der Spannöffnung gleichmäßig auf den Werkzeugschaft ausgeübt werden kann. Weil das die Dehnfungen voneinander trennenden Wandmaterial der Trennwand, d.h. sogenannte Trennwandstege, am Hohlraum auslaufen, d.h. nicht aber am Grund der Spannöffnung anliegt, wird über die volle Länge der Spannöffnung eine gleichmäßige radiale Verformbarkeit der Trennwand erreicht. Der Hohlraum kann insbesondere einen Durchmesser haben, der dem Durchmesser entspricht, bis zu dem sich die Dehnfugen radial nach außen erstrecken, d.h. auf der ein Grund jeder Dehnfuge liegt.

Die Druckkammer kann sich radial nach innen bis auf einen Innenerstreckungsdurchmesser erstrecken, der im Bereich des 1,6 bis 1,7-fachen eines Spannöffnungsdurchmessers liegt.

Der Innenerstreckungsdurchmesser ist der Durchmesser, bis zu dem sich die Druckkammer, insbesondere bei nicht mit Hydraulikdruck beaufschlagter Druckkammer, radial nach innen, d.h. zur Spannöffnung hin, erstreckt. Der Innenerstreckungsdurchmesser entspricht der Außenumfangsfläche der Trennwand, die die Druckkammer begrenzt und bei eingespanntem Werkzeug mit Hydraulikdruck beaufschlagt ist. Wenn die Außenumfangsfläche der Trennwand eine kreiszylindrische Außenumfangsfläche ist, ist der Innenerstreckungsdurchmesser gleich der Durchmesser der Außenumfangsfläche. Bei einer nicht-zylindrischen, strukturierten Außenumfangsfläche ist der Innenerstreckungsdurchmesser der kleinste Durchmesser der Außenumfangsfläche.

Wenn der Innenerstreckungsdurchmesser im Bereich des 1,6 bis 1,7-fachen-fachen des Spannöffnungsdurchmessers liegt, liegt die Druckkammer auf einem größeren Innenerstreckungsdurchmesser als dies bei herkömmlichen Hydrodehnspannfuttern, die denselben Spannöffnungsdurchmesser aufweisen, der Fall ist. Im Vergleich zu herkömmlichen Hydrodehnspannfuttern hat die Trennwand damit eine größere Wandstärke, sie ist also in radialer Richtung dicker und stabiler, so dass sie für äußerst hohe Drehmomente mit höheren Hydraulikdrücken beaufschlagt werden kann. Ein Schneidwerkzeug kann selbst dann zuverlässig gespannt werden, wenn äußerst hohe Drehmomente übertragen werden müssen

Aufgrund des größeren Innenerstreckungsdurchmessers wirkt der in der Drucckammer aufgebaute Hydraulikdruck zudem auf eine hinsichtlich des Flächeninhalts größere Außenumfangsfläche der die Druckkammer begrenzenden Trennwand. Aufgrund der größeren Außenumfangsfläche der Trennwand kann im Vergleich zu einem herkömmlichen Hydrodehnspannfutter daher auch ohne eine Druckanhebung über den für das herkömmliche Hydrodehnspannfutter vorgegebenen maximalen Hydraulikdruck hinaus eine höhere radiale Spannkraft in Richtung der Spannöffnung geschaffen werden. Dank der höheren Spannkraft wird eine höhere radiale Biegesteifigkeit und damit eine höhere Rundlaufgenauigkeit erreicht.

Beispielsweise kann der Spannöffnungsdurchmesser 20 mm und der Innenerstreckungsdurchmesser 33,45 mm betragen, wodurch sich ein Faktor von 1,6725 zwischen dem Spannöffnungsdurchmesser und dem Innenerstreckungsdurchmesser ergibt.

In einer weiteren Ausführungsform erstreckt sich die Druckkammer radial nach außen bis auf einen Außenerstreckungsdurchmesser, der im Bereich des 1,05 bis 1,15-fachen des Innenerstreckungsdurchmessers der Druckkammer liegt.

Analog zum Innenerstreckungsdurchmesser ist der Außenerstreckungsdurchmesser der Durchmesser, bis zu dem sich die Druckkammer radial nach außen, d.h. von der Spannöffnung weg, erstreckt.

In einer weiteren Ausführungsform erstrecken sich die Dehnfugen radial nach au-ßen bis auf einen Durchmesser, der im Bereich des 1,54 bis 1,58-fachen des Spannöffnungsdurchmessers liegt.

Durch die Wahl eines Durchmessers, der im Bereich des 1,54 bis 1,58-fachen des Spannöffnungsdurchmessers liegt, kann zum einen sichergestellt werden, dass die von dem Spannöffnungsdurchmesser ausgehende Tiefe der Dehnfugen bzw. Längsschlitze die Stabilität der Trennwand nicht beeinträchtigt und zum anderen die nötige radiale Elastizität zur sicheren Spannung des Werkzeugschafts erzielt wird.

In einer weiteren Ausführungsform kann im Längenbereich der Spannöffnung ein maximaler Außenmanteldurchmesser des Hydrodehnspannfutters im Bereich des 2,6 bis 2,9-fachen des Spannöffnungsdurchmessers liegen.

Wenn der maximale Außenmanteldurchmesser des Hydrodehnspannfutters im Bereich des 2,6 bis 2,9-fachen des Spannöffnungsdurchmessers liegt, kann sichergestellt werden, dass das Hydrodehnspannfutter im Bereich der Spannöffnung eine hohe Stabilität aufweist, aber zugleich eine schlanke Bauweise hat. Beispielsweise kann der maximale Außenmanteldurchmesser 57 mm betragen, wenn der Spannöffnungsdurchmesser 20 mm beträgt.

Die Druckkammer kann zwei axial voneinander beabstandete Druckräume bilden, die durch einen Ringkanal miteinander verbunden sind.

Durch die beiden axial voneinander beabstandeten Druckräume wird erreicht, dass der Werkzeugschaft an zwei axial voneinander beabstandeten Stellen eine radiale Spannkraft erfährt, was im Vergleich zu einer Druckkammer mit lediglich einem Druckraum zu einer zentrierten Einspannung des Werkzeugs und zu einer hohen Rundlaufgenauigkeit führt.

In einer weiteren Ausführungsform ist zumindest ein die Spannöffnung, Trennwand und Druckkammer aufweisender Längenabschnitt des Hydrodehnspannfutters einstückig ausgebildet.

Der die Spannöffnung, Trennwand und Druckkammer aufweisende Längenabschnitt kann insbesondere mittels eines generativen/additiven Fertigungsverfahrens, wie z.B. eines 3D-Druck-Verfahrens, einstückig ausgebildet sein. Durch die einstückige Ausbildung wird eine besonders hohe Stabilität und Festigkeit des Längenabschnitts erzielt. Zudem entfällt im Vergleich zu einem mehrteiligen Aufbau, beispielsweise mittels einer die radial-elastische Trennwand bildenden und in eine Aufnahmeöffnung des Hydrodehnspannfutters eingesetzten Dehnspannbuchse, das Erfordernis einer Abdichtung der Druckkammer. Mit der einstückigen Bauweise lassen sich in der Druckkammer bei hoher Prozesssicherheit auch relativ hohe Hydraulikdrücke realisieren und hohe Drehmomente auf das Schneidwerkzeug übertragen. Zur Aufnahme eines Werkzeugschafts mit einem kleineren Durchmesser als der Spannöffnungsdurchmesser kann in die Spannöffnung zusätzlich eine Reduzierhülse eingesetzt sein.

Alternativ dazu kann das Hydrodehnspannfutter einen sich entlang der Längsmittelachse erstreckenden Grundkörper und eine in einer zentralen Aufnahmeöffnung im Grundkörper angeordnete Dehnspannbuchse aufweisen, die die radial-elastisch verformbare Trennwand bildet und die an ihren beiden axialen Enden mit dem Grundkörper abgedichtet, beispielsweise form- und/oder stoffschlüssig, verbunden ist. Das aus dem Grundkörper und der Dehnspannbuchse aufgebaute Hydrodehnspannfutter bildet ebenso wie die oben angesprochene einstückig ausgebildete Ausführungsform eine einstückig handbarbare Ausführungsform, wenn die Dehnspannbuchse mit dem Grundkörper, beispielsweise durch Verlötung, dauerhaft fest verbunden ist. Zur Aufnahme eines Werkzeugschafts mit einem kleineren Durchmesser als der Spannöffnungsdurchmesser kann in die Spannöffnung zusätzlich eine Reduzierhülse eingesetzt sein.

Die Dehnspannbuchse kann dabei mit einer definierten Fügepassung in der Aufnahmeöffnung im Grundkörper sitzen. Insbesondere kann die Dehnspannbuchse zur Ausbildung einer formschlüssigen Verbindung mit dem Grundkörper stirnseitig einen ringförmigen Bund aufweisen, der in einer im Grundkörper ausgebildeten ringförmigen Nut sitzt. Die Dehnspannbuchse kann mit dem Grundkörper beispielsweise verlötet oder verschweißt sein.

Die Dehnspannbuchse kann in axialer Richtung am Grund der Aufnahmeöffnung des Grundkörpers anliegen.

Die Anlage der Dehnspannbuchse am Grund der Aufnahmeöffnung ermöglicht eine besonders einfache Positionierung. Für den Fall, dass die Spannöffnung und die Dehnfugen in einen an die Spannöffnung anschließenden Hohlraum münden, kann durch den Hohlraum verhindert werden, dass in Umfangsrichtung der Dehnspannbuchse zwischen den Dehnfugen angeordnete Materialstege sich axial über die gesamte Länge der Dehnspannbuchse erstrecken und am Grund der Aufnahmeöffnung anliegen, was im Betrieb des Hydrodehnspannfutters zu unerwünschter Reibung führen könnte. Die Dehnspannbuchse kann daher schaftseitig nur in einem Bereich außerhalb des Hohlraums am Grund der Aufnahmeöffnung anliegen.

In einer weiteren Ausführungsform liegt die Stirnseite der Dehnspannbuchse mit der Stirnseite des Grundkörpers bündig.

Die Dehnfugen können sich von einer Stirnseite der Dehnspannbuchse aus gemessen über eine Länge im Bereich des 0,8 bis 0,9-fachen der Länge der Dehnspannbuchse erstrecken.

Wenn die Länge der Dehnfugen im Bereich des 0,8 bis 0,9-fachen der Länge der Dehnspannbuchse liegt, ergeben sich gute Ergebnisse hinsichtlich des mit der Dehnspannbuchse übertragenen Drehmoments. Wenn die Dehnspannbuchse am Grund der Aufnahmeöffnung anliegt, können sich die Dehnfugen insbesondere von der Stirnseite zur Schaftseite des Hydrodehnspannfutters erstrecken und in einem an die Spannöffnung anschließenden Hohlraum münden.

In einer weiteren Ausführungsform hat die Dehnspannbuchse eine die Drucckammer abbildende strukturierte Außenmantelfläche.

Insbesondere kann die Außenmantelfläche der Dehnspannbuchse über die axiale Länge der Dehnspannbuchse unterschiedliche Außendurchmesser aufweisen. Alternativ dazu kann eine die Druckkammer abbildende Struktur in der zentralen Aufnahmeöffnung ausgebildet sein. Mit anderen Worten kann die Mantelfläche der Dehnspannbuchse bei in die Aufnahmeöffnung des Grundkörpers eingesetzter Dehnspannbuchse mit der Innenumfangsfläche der Aufnahmeöffnung die Druckkammer ausbilden, die bis auf eine Druckfluidzufuhrstelle, die beispielsweise durch einen in die Druckkammer mündenden Stichkanal gebildet ist, geschlossen ist.

Die Aufnahmeöffnung kann kreiszylindrisch ausgebildet sein.

Im Sinne einer einfachen Fertigung kann die Aufnahmeöffnung kreiszylindrisch ausgestaltet sein. Dementsprechend kann die in der Aufnahmeöffnung angeordnete Dehnspannbuchse eine die Druckkammer abbildende strukturierte Außenmantelfläche haben.

In einer weiteren Ausführungsform ist die Dehnspannbuchse zumindest im Längenbereich der Trennwand massiv ausgebildet.

Geschlossene Hohlräume bzw. Ausnehmungen im Bereich der radial-elastisch verformbaren Trennwand können bei Beaufschlagung der Druckkammer mit Druckfluid eine radiale Einschnürung der Spannbohrung beeinflussen, so dass die Dehnspannbuchse auf den in der Spannöffnung aufgenommenen Werkzeugschaft große Drehmomente übertragen kann. Zur Ausbildung derartiger Hohlräume bzw. Ausnehmungen ist jedoch erforderlich, dass die Dehnspannbuchse mittels eines generativen Fertigungsverfahrens, beispielsweise 3D-Druck, gefertigt ist, wodurch sich die Fertigungskosten erhöhen können. Eine massive Ausbildung der Dehnspannbuchse im Bereich der Trennwand kann die Fertigungskosten niedrig halten. Nichtsdestoweniger wäre es selbstverständlich aber möglich, dass im Bereich der radial-elastisch verformbaren Trennwand zusätzlich zu den Dehnfugen geschlossene Hohlräume bzw. Ausnehmungen ausgebildet sind, die jeweils in Umfangsrichtung zwischen zwei Dehnfugen liegen können.

Wenn die Druckkammer sich radial nach innen bis auf einen Innenerstreckungsdurchmesser erstreckt, der im Bereich des 1,6 bis 1,7-fachen des Spannöffnungsdurchmessers liegt, lässt sich, wie oben beschrieben, die Druckkammer mit hohen Hydraulikdrücken beaufschlagen, so dass auch ohne in der Dehnspannbuchse ausgebildete Hohlräume hohe Drehmomente auf den Werkzeugschaft übertragen werden können, wodurch die Fertigungskosten geringgehalten werden können.

Weitere Einzelheiten, Merkmale und Vorteile ergeben sich aus der nachfolgenden Beschreibung einer bevorzugten Ausführungsform anhand der Zeichnungen. Es zeigen:
Fig. 1 ein Hydrodehnspannfutter gemäß einer Ausführungsform in einer perspektivischen Ansicht;
Fig. 2 eine Längsschnittansicht des Hydrodehnspannfutters aus Fig. 1;
Fig. 3 eine Schnittansicht entlang der Linie A-A von Fig. 2;
Fig. 4 eine weitere Längsschnittansicht des Hydrodehnspannfutters aus Fig. 1;
Fig. 5 eine Detailansicht des Details Y aus Fig. 4; und
Fig. 6 eine perspektivische Ansicht einer Dehnspannbuchse des Hydrodehnspannfutters aus Fig. 1.

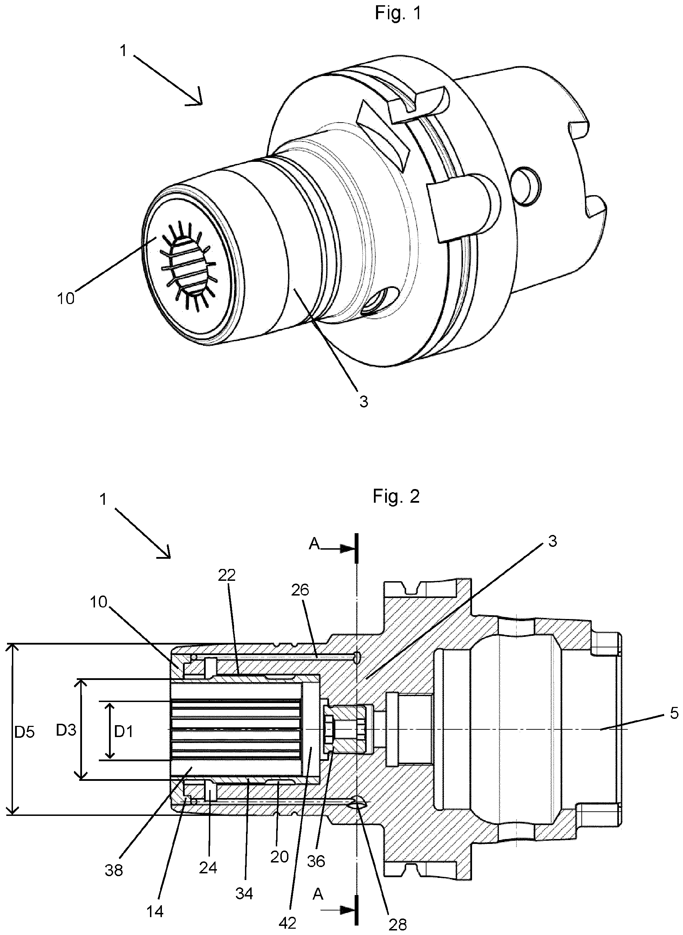

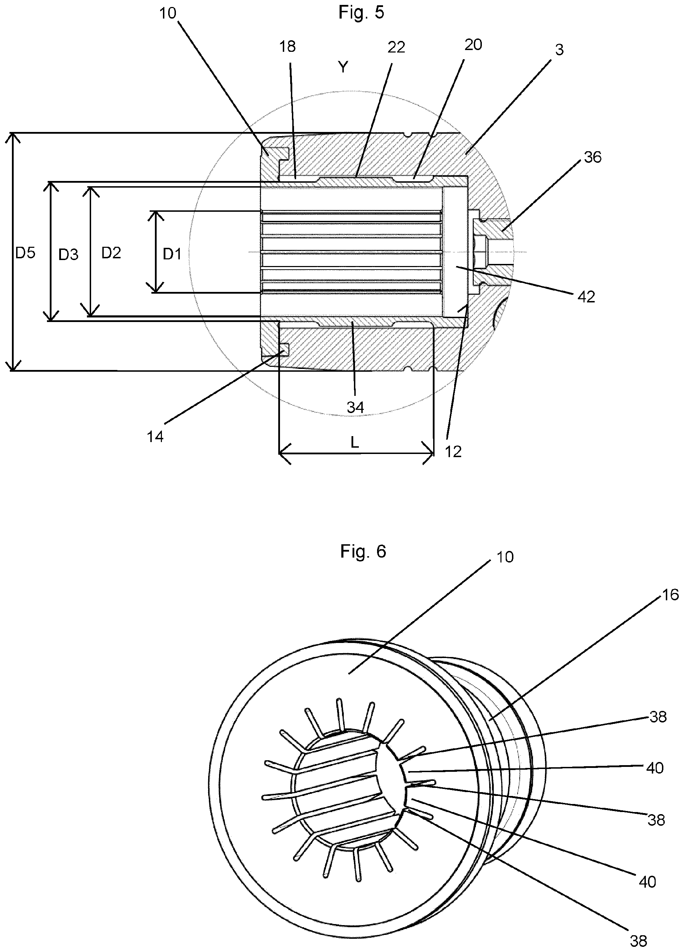

In den Figuren 1 bis 5 ist mit dem Bezugszeichen 1 ein Hydrodehnspannfutter bezeichnet, das einen Grundkörper 3 mit einer Längsmittelachse 5 hat, in den eine Dehnspannbuchse 10 eingesetzt ist, die in Figur 6 in einer perspektivischen Ansicht separat dargestellt ist.

Das Hydrodehnspannfutter 1 mit der Längsmittelachse 5 ist in der gezeigten Ausführungsform mit einem Hohlschaftkegel (HSK) ausgestattet. Es sei an dieser Stelle darauf hingewiesen, dass der Hohlschaftkegel nicht entscheidend ist und das Hydrodehnspannfutter 1 anstelle des Hohlschaftkegels einen anderen Spannschaft, beispielsweise einen Zylinderschaft oder Steilkegelschaft, haben kann.

Der Grundkörper 3 hat stirnseitig eine zentrale kreiszylindrische Aufnahmeöffnung, in die die Dehnspannbuchse 10 so eingesetzt ist, dass eine Stirnseite der Dehnspannbuchse 10 mit einer Stirnseite des Grundkörpers 3 bündig liegt und die Dehnspannbuchse 10 an einem Grund 12 der Aufnahmeöffnung anliegt. Die Dehnspannbuchse 10 ist mit dem Grundkörper 3 einerseits formschlüssig verbunden, indem ein stirnseitig ausgebildeter ringförmiger Bund 14 einer im Grundkörper 3 entsprechend ausgebildeten ringförmigen Nut sitzt, und andererseits durch Verlöten mit dem Grundkörper 3 stoffschlüssig verbunden, so dass eine fluidische Abdichtung zwischen der Dehnspannbuchse 10 und dem Grundkörper 3 gebildet wird. Wie in Fig. 2 gezeigt, weist der Grundkörper 3 im Bereich der zentralen Aufnahmeöffnung einen maximalen Außendurchmesser D5 auf.

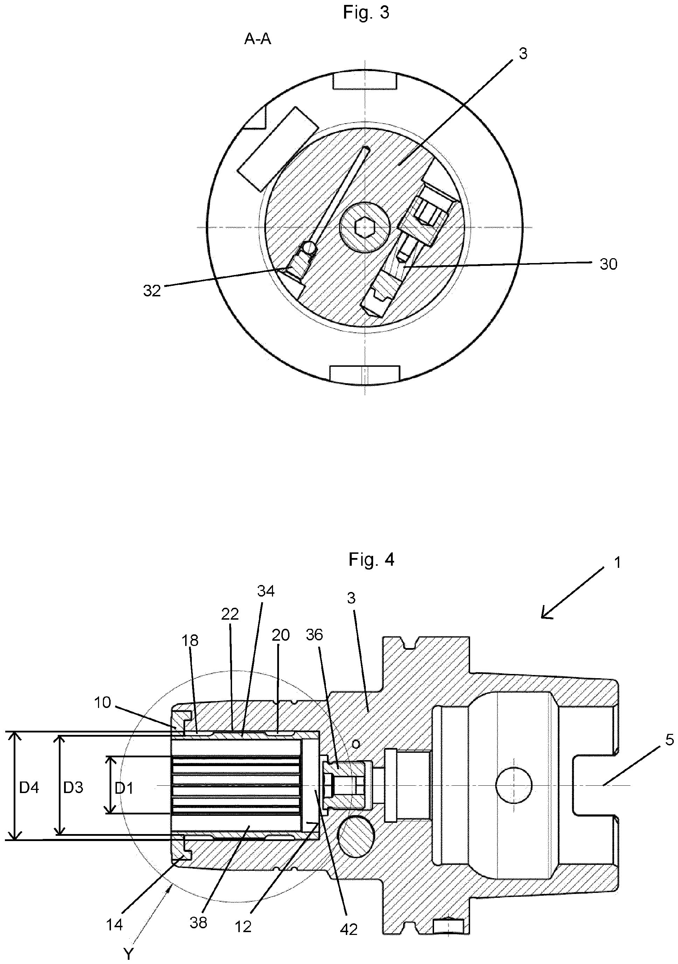

Eine Innenoberfläche der zentralen Aufnahmeöffnung begrenzt im Zusammenwirken mit einer Außenmantelfläche 16 der Dehnspannbuchse 10 eine geschlossene, mit Druckfluid befüllbare Druckkammer der Länge L, wie es in Fig. 5 gezeigt ist. In der gezeigten Ausführungsform bildet die Struktur der Außenmantelfläche 16 der Dehnspannbuchse 10 die Druckkammer ab. Die Druckkammer bildet zwei axial voneinander beabstandete Druckräume, einen ersten Druckraum 18 und einen zweiten Druckraum 20, die durch einen rundumlaufenden Ringkanal 22 fluidisch miteinander verbunden sind. Die Druckkammer ist über einen radialen Stichkanal 24 an einen axialen Druckfluid-Versorgungskanal 26 angeschlossen, über den Druckfluid aus einer einen Stellkolben 30 aufnehmenden Druckerzeugungskammer 28 in die Druckkammer eingespeist werden kann. Über eine in Fig. 3 dargestellte Entlüftungsschraube 32 lässt sich das wie oben beschrieben gebildete Kanal/-Kammersystem entlüften.

Die Dehnspannbuchse 10 hat eine zentrale Spannöffnung mit einem Spannöffnungsdurchmesser D1, in das ein Schaftwerkzeug eingesetzt und bei Beaufschlagung der Druckkammer mit Druckfluid eingespannt werden kann. Eine mit dem Grundkörper 3 verschraubte Einstellschraube 36 bildet einen axialen Anschlag für das Schaftwerkzeug. Die Druckkammer ist durch eine radial-elastisch verformbare Trennwand 34 der Dehnspannbuchse 10 von der Spannöffnung getrennt. In der gezeigten Ausführungsform erstreckt sich die Druckkammer radial nach innen bis auf einen Innenerstreckungsdurchmesser D3, der einer Außenumfangsfläche der Trennwand 34 entspricht, die die Druckkammer begrenzt. Radial nach außen erstreckt sich die Druckkammer bis auf einen Außenerstreckungsdurchmesser D4, der der Innenumfangsfläche der zentralen Aufnahmeöffnung des Grundkörpers 3 entspricht, in der die Dehnspannbuchse 10 eingesetzt ist.

Die radiale Elastizität der Trennwand 34 wird durch 16 von um die Spannöffnung herum verteilten, sich entlang der Längsmittelachse 5 erstreckenden Längsschlitzen 38 ausgebildet, die zur Spannöffnung hin offen und zur Druckkammer hin geschlossen sind. Wie in den Figuren 2, 4 und 5 gezeigt ist, erstrecken sich die Längsschlitze 38 von der Stirnseite aus axial über eine Länge im Bereich des 0,8 bis 0,9-fachen der Länge der Dehnspannbuchse 10. Radial nach außen erstrecken sich die Längsschlitze 38 bis auf einen Durchmesser D2, der im Bereich des 1,54 bis 1,58-fachen des Spannöffnungsdurchmessers D1 liegt, wie in Fig. 6 gezeigt.

Wie des Weiteren in Fig. 6 dargestellt ist, sind in der Dehnspannbuchse 10 der gezeigten Ausführungsform insgesamt 16 um die Längsmittelachse 5 herum äquidistant verteilte Längsschlitze 38 ausgebildet, die in Erstreckungsrichtung gesehen einen U-förmigen Querschnitt aufweisen. Zwischen den Längsschlitzen 38 sind Materialstege 40 ausgebildet. Wie in den Figuren 2, 4 und 5 gezeigt, münden die die Längsschlitze 38 und die Materialstege 40 in einem zur Schaftseite des Hydrodehnspannfutters 1 offenen Hohlraums 42, dessen Durchmesser dem Durchmesser D2, d.h. dem Grund der Längsschlitze 38 entspricht. Folglich liegt die Dehnspannbuchse 10 nur in einem Bereich außerhalb des Hohlraums 42 bzw. des Durchmessers D2 am Grund 12 der Aufnahmeöffnung an.

In der gezeigten Ausführungsform erstreckt sich die Druckkammer radial nach innen bis auf den Innenerstreckungsdurchmesser D3, der im Bereich des 1,6 bis 1,7-fachen des Spannöffnungsdurchmessers D1 liegt. Radial nach außen erstreckt sich die Druckkammer bis auf den Außenerstreckungsdurchmesser D4, der im Bereich des 1,05 bis 1,15-fachen des Innenerstreckungsdurchmessers D3 der Druckkammer liegt.

Das Hydrodehnspannfutter 1 kann hohe Drehmomente mit einer hohen Spannkraft auf das Schaftwerkzeug übertragen und erzielt dabei eine höhere radiale Biegesteifigkeit und eine höhere Rundlaufgenauigkeit als herkömmliche Hydrodehnspannfutter.

In der gezeigten Ausführungsform ist das Hydrodehnspannfutter in einem stirnseitigen vorderen Längenbereich aufgrund der in die Aufnahmeöffnung des Grundkörpers 3 eingesetzten Dehnspannbuchse 1 mehrteilig aufgebaut. Es ist alternativ dazu jedoch auch möglich, dass der die Spannöffnung, Trennwand und Druckkammer aufweisende Längenabschnitt des Hydrodehnspannfutters insbesondere mittels eines generativen/additiven Fertigungsverfahrens, wie z.B. eines 3D-Druck-Verfahrens, einstückig ausgebildet ist.

### Bezugszeichenliste

- D1: Spannöffnungsdurchmesser
- D2: Durchmesser
- D3: Innenerstreckungsdurchmesser
- D4: Außenerstreckungsdurchmesser
- D5: maximaler Außenmanteldurchmesser
- L: Länge
- 1: Hydrodehnspannfutter
- 3: Grundkörper
- 5: Längsmittelachse
- 10: Dehnspannbuchse
- 12: Grund
- 14: Bund
- 16: Außenmantelfläche
- 18: erster Druckraum
- 20: zweiter Druckraum
- 22: Ringkanal
- 24: Stichkanal
- 26: Druckfluid-Versorgungskanal
- 28: Druckerzeugungskammer
- 30: Stellkolben
- 32: Entlüftungsschraube
- 34: Trennwand
- 36: Einstellschraube
- 38: Längsschlitz
- 40: Materialsteg
- 42: Hohlraum

## Patentansprüche

1. Hydrodehnspannfutter (1) mit einer sich entlang einer Längsmittelachse (5) erstreckenden zentralen Spannöffnung zum Aufnehmen und Spannen eines Werkzeugschafts und einer die Spannöffnung umgebenden, mit Druckfluid beaufschlagbaren Druckkammer, die durch eine radial-elastisch verformbare Trennwand (34) von der Spannöffnung abgegrenzt ist, **dadurch gekennzeichnet, dass**
in der Trennwand (34) eine Vielzahl von um die Spannöffnung herum verteilten, sich entlang der Längsmittelachse (5) erstreckenden Dehnfugen (38) ausgebildet sind, die zur Spannöffnung hin offen und zur Druckkammer hin geschlossen sind.

2. Hydrodehnspannfutter (1) nach Anspruch 1, **dadurch gekennzeichnet, dass** die Dehnfugen (38) um die Längsmittelachse (5) herum äquidistant verteilt sind.

3. Hydrodehnspannfutter (1) nach Anspruch 1 oder 2, **dadurch gekennzeichnet, dass** die Dehnfugen (38) als im Querschnitt schmale Axialschlitze ausgebildet sind.

4. Hydrodehnspannfutter (1) nach einem der vorhergehenden Ansprüche, **dadurch gekennzeichnet, dass** die Dehnfugen (38), in Erstreckungsrichtung gesehen, einen U-, V- oder rechtecktförmigen Querschnitt haben.

5. Hydrodehnspannfutter (1) nach einem der vorhergehenden Ansprüche, **dadurch gekennzeichnet, dass** die Spannöffnung und die Dehnfugen (38) in axialer Richtung in einen an die Spannöffnung anschließenden Hohlraum münden.

6. Hydrodehnspannfutter nach einem der vorhergehenden Ansprüche, **dadurch gekennzeichnet, dass** die Druckkammer sich radial nach innen bis auf einen Innenerstreckungsdurchmesser (D3) erstreckt, der im Bereich des 1,6 bis 1,7-fachen eines Spannöffnungsdurchmessers (D1) liegt.

7. Hydrodehnspannfutter (1) nach Anspruch 6, **dadurch gekennzeichnet, dass** sich die Druckkammer radial nach außen bis auf einen Außenerstreckungsdurchmesser (D4) erstreckt, der im Bereich des 1,05 bis 1,15-fachen des Innenerstreckungsdurchmessers (D3) der Druckkammer liegt.

8. Hydrodehnspannfutter (1) nach einem der vorhergehenden Ansprüche, **dadurch gekennzeichnet, dass** die Dehnfugen (38) sich radial nach außen bis auf einen Durchmesser (D2) erstrecken, der im Bereich des 1,54 bis 1,58-fachen des Spannöffnungsdurchmessers (D1) liegt.

9. Hydrodehnspannfutter (1) nach einem der vorhergehenden Ansprüche, **dadurch gekennzeichnet, dass** im Längenbereich der Spannöffnung ein maximaler Außenmanteldurchmesser des Hydrodehnspannfutters (1) im Bereich des 2,6 bis 2,9-fachen des Spannöffnungsdurchmessers (D1) liegt.

10. Hydrodehnspannfutter (1) nach einem der vorhergehenden Ansprüche, **dadurch gekennzeichnet, dass** die Druckkammer zwei axial voneinander beabstandete Druckräume (18, 20) bildet, die durch einen Ringkanal (22) miteinander verbunden sind.

11. Hydrodehnspannfutter (1) nach einem der vorhergehenden Ansprüche, **dadurch gekennzeichnet, dass** zumindest ein die Spannöffnung, Trennwand (34) und Druckkammer aufweisender Längenabschnitt des Hydrodehnspannfutters (1) einstückig ausgebildet ist.

12. Hydrodehnspannfutter (1) nach einem der vorhergehenden Ansprüche, **gekennzeichnet durch** einen sich entlang der Längsmittelachse (5) erstreckenden Grundkörper (3) und eine in einer zentralen Aufnahmeöffnung im Grundkörper (3) angeordnete Dehnspannbuchse (10), die die radial-elastisch verformbare Trennwand (34) bildet und die an ihren beiden axialen Enden mit dem Grundkörper (3) abgedichtet, beispielsweise form- und/oder stoffschlüssig, verbunden ist.

13. Hydrodehnspannfutter (1) nach Anspruch 12, **dadurch gekennzeichnet, dass** die Dehnspannbuchse (10) in axialer Richtung am Grund (12) der Aufnahmeöffnung des Grundkörpers (3) anliegt.

14. Hydrodehnspannfutter (1) nach Anspruch 12 oder 13, **dadurch gekennzeichnet, dass** eine Stirnseite der Dehnspannbuchse (10) mit der Stirnseite des Grundkörpers (3) bündig liegt.

15. Hydrodehnspannfutter (1) nach einem der Ansprüche 12 bis 14, **dadurch gekennzeichnet, dass** sich die Dehnfugen (38) von einer Stirnseite der Dehnspannbuchse (10) aus gemessen über eine Länge im Bereich des 0,8 bis 0,9-fachen der Länge der Dehnspannbuchse (10) erstrecken.

16. Hydrodehnspannfutter (1) nach einem der Ansprüche 12 bis 15, **dadurch gekennzeichnet, dass** die Dehnspannbuchse (10) eine die Druckkammer abbildende strukturierte Außenmantelfläche (16) hat.

17. Hydrodehnspannfutter (1) nach einem der Ansprüche 12 bis 16, **dadurch gekennzeichnet, dass** die Aufnahmeöffnung kreiszylindrisch ausgebildet ist.

18. Hydrodehnspannfutter (1) nach einem der Ansprüche 12 bis 17, **dadurch gekennzeichnet, dass** die Dehnspannbuchse (10) zumindest im Längenbereich der Trennwand (34) massiv ausgebildet ist.
